# EUROPEAN PATENT APPLICATION

(11) **EP 4 826 515 A1**
(43) Date of publication of application: **21.10.2026**
(21) Application number: 25170582.8
(22) Date of filing: 15.04.2025
(51) Int. Cl.: G06F 3/14, G06F 3/147, G06N 3/02, H04N 21/85, G06N 3/0475, G02B 1/11

(54) **MULTIMEDIA SYSTEM AND INTERACTIVE METHOD THEREOF**

(71) Applicant: InnoLux Corporation, Chu-Nan, Miao-Li 350 (TW)
(72) Inventor: LIN, Po-Shen, 350 Miao-Li County (TW); LIN, Gang-Xuan, 350 Miao-Li County (TW); KO, Chao-Hsuan, 350 Miao-Li County (TW)
(74) Representative: Straus, Alexander

(57) **Abstract**

A multimedia system (10) is used to interact with a terminal device (20) of a user and has a processing module (100) and a display module (150). The processing module (100) has a processing unit (120) and an image generation unit (130). The processing unit (120) is electrically connected to the image generation unit (130) and is used to receive input information (IN) from the terminal device (20). The image generation unit (130) generates an image (M1) based on the input information (IN) and transmits relevant data (Inf1) of the image (M1) to the terminal device (20). The display module (160) has a receiving unit (160) and a display unit (180). The receiving unit (160) is electrically connected to the display unit (180) and used to receive the image (M1) from the processing module (100) and transmit the image (M1) to the display unit (180).

## Description

### Field of the Disclosure

This disclosure relates to a multimedia system and an interactive method for a multimedia system, particularly a multimedia system and an interactive method for interacting with a user's terminal device to display images.

### Background of the Disclosure

In retail settings such as shopping malls and electronics stores, it's common to find displays showcasing static images or videos. While these visuals often serve as product advertisements or demonstrations of the display's capabilities, they generally lack interactive features that would allow for direct consumer engagement.

### Summary of the Disclosure

The present disclosure aims at providing an image system and an interactive method thereof. The image system provides a new way for users to interact with digital content more intuitively and conveniently.

This is achieved by an image system and an interactive method thereof for the image system according to the independent claims here below. The dependent claims pertain to corresponding further developments and improvements.

### Brief Description of the Drawings

In the following, the disclosure is further illustrated by way of example, taking reference to the accompanying drawings. Thereof:
FIG. 1 is a functional block diagram illustrating a multimedia system connected to a user's terminal device in accordance with an embodiment of the present disclosure;
FIG. 2 is a flowchart of the interactive method for the multimedia system shown in FIG. 1;
FIG. 3 is a flowchart of another interactive method for the multimedia system shown in FIG. 1;
FIG. 4 is a schematic diagram of the display unit in the multimedia system shown in FIG. 1;
FIG. 5 is a schematic diagram of the anti-reflective layer in FIG. 4; and
FIG. 6 to FIG. 9 are schematic diagrams of the anti-glare layer in FIG. 4 according to different embodiments of the present disclosure.

### Detailed Description

In the present disclosure, electronic devices may include display devices, light-emitting devices, backlight devices, virtual reality devices, augmented reality (AR) devices, antenna devices, sensing devices, splicing devices, or any combination thereof, but are not limited to these. Display devices may be non-self-luminous or self-luminous displays, and may be color or monochrome displays as needed. Antenna devices may be liquid crystal type or non-liquid crystal type antenna devices, sensing devices may be capacitive, light, thermal, or ultrasonic sensing devices, and splicing devices may be display splicing devices or antenna splicing devices, but are not limited to these. The electronic units in electronic devices may include passive and active components, such as capacitors, resistors, inductors, diodes, transistors, etc. Diodes may include light-emitting diodes (LEDs) or photodiodes. Light-emitting diodes may include organic light-emitting diodes (OLEDs), mini LEDs, micro LEDs, or quantum dot LEDs, but are not limited to these. Transistors may include top gate thin-film transistors, bottom gate thin-film transistors, or dual gate thin-film transistors, but are not limited to these. Electronic devices may also include fluorescence materials, phosphor materials, quantum dot (QD) materials, or other suitable materials as needed, but are not limited to these. Electronic devices may have peripheral systems such as drive systems, control systems, light source systems, etc., to support display devices, antenna devices, wearable devices (e.g., including augmented reality or virtual reality devices), in-vehicle devices (e.g., including car windshields), or splicing devices.

In some embodiments, an electronic panel may be a type of electronic device, and the electronic panel may be at least a combination of a display device and a touch sensing device, so that the electronic panel has at least display and touch sensing functions. The following description uses an electronic device as an example to explain the present disclosure, but the design of the present disclosure may be applied to any suitable electronic device.

Additionally, the switching element described in the present disclosure may be any electronic component with a switching effect. For example, the switching element may be a thin-film transistor. For example, the thin-film transistor may be a top gate thin-film transistor, a bottom gate thin-film transistor, a dual gate thin-film transistor, or other suitable types of transistors.

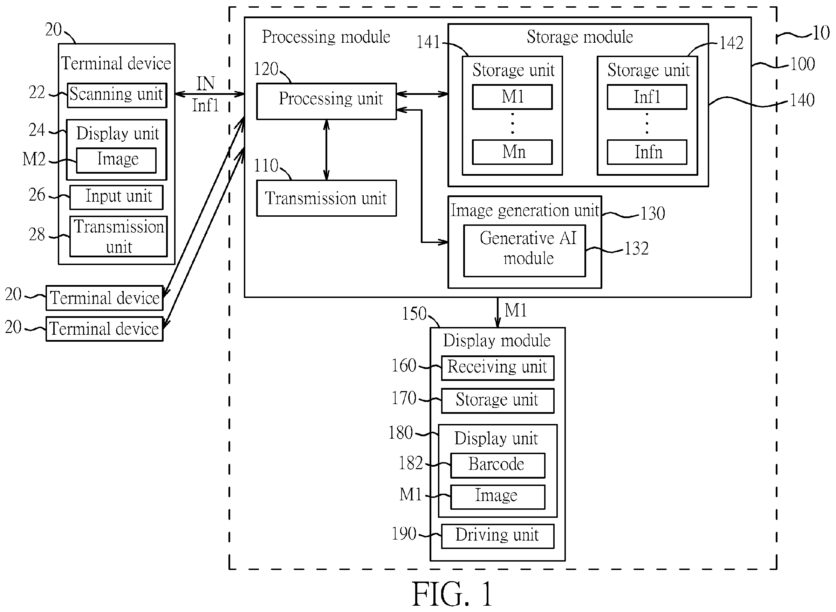

Please refer to FIG. 1. FIG. 1 is a functional block diagram illustrating a multimedia system 10 connected to a user's terminal device 20 in accordance with an embodiment of the present disclosure. The multimedia system 10 is configured to interact with the terminal device 20. The multimedia system 10 comprises a processing module 100 and a display module 150. The processing module 100 comprises a processing unit 120 and an image generation unit 130. The processing unit 120 is electrically connected to the image generation unit 130. The processing unit 120 is configured to receive input information IN from the terminal device 20. The image generation unit 130 generates an image M1 based on the input information IN and transmits relevant data Infl of the image M1 to the terminal device 20 via a transmission unit 110. The display module 150 comprises a receiving unit 160 and a display unit 180 electrically connected to the receiving unit 160. The receiving unit 160 is configured to receive the image M1 from the processing module 100 and transmit the image M1 to the display unit 180. The display unit 180 is configured to display the image M1. The terminal device 20 comprises a display unit 24, which is configured to display an image M2 based on the relevant data Infl received from the multimedia system 10. The terminal device 20 may further comprise a transmission unit 28 configured to transmit the input information IN to the transmission unit 110 and receive the relevant data Inf1 from the transmission unit 110.

In some embodiments of the present disclosure, the relevant data Inf1 of the image M1 may be all the data of the image M1, and the image M2 displayed by the display unit 24 is the original image M1. In some embodiments of the present disclosure, the relevant data Infl of the image M1 may be generated by compressing or thumbnail processing the image M1 through the processing unit 120, and the resolution and/or data amount of the image M2 displayed by the display unit 24 may be less than the resolution and/or data amount of the image M1.

In some embodiments of the present disclosure, the processing module 100 may be a server, and the display module 150 may be a display. In some embodiments of the present disclosure, the processing module 100 and the display module 150 may be integrated into a single display device. The processing unit 120 of the processing module 100 may be, but is not limited to, a central processing unit (CPU). The display unit 180 is an electronic device capable of displaying images, and may be a non-self-luminous or self-luminous display depending on the requirements, and may be a color display or a monochrome display depending on the requirements.

The terminal device 20 may be a mobile phone, tablet computer, or other electronic device capable of displaying the image M2. The terminal device 20 may further include a scanning unit 22 for scanning a barcode 182. In this embodiment, the barcode 182 may be displayed on the display unit 180 of the display module 150. In other embodiments of the present disclosure, the barcode 182 may be printed on a physical object (e.g., sticker, paper, film), and the object with the printed barcode 182 may be attached to the multimedia system 10 (e.g., attached to the display module 150) for scanning by the scanning unit 22. Furthermore, the scanning unit 22 may be a camera, a video camera, an infrared scanning device, or other components or devices capable of optically sensing the barcode 182. The barcode 182 may be, but is not limited to, a QR code or a two-dimensional barcode. When a user scans the barcode 182 using the scanning unit 22 of the terminal device 20, the terminal device 20 can obtain a URL from the barcode 182 and establish a connection with the multimedia system 10 through the URL. After the terminal device 20 establishes the connection with the multimedia system 10, the display unit 24 of the terminal device 20 may display a plurality of scenarios for the user to select on the terminal device 20. The user can select one of the scenarios through the input unit 26 of the terminal device 20 to generate corresponding input information IN (i.e., the input information IN is generated based on the scenario selected by the user). The input unit 26 of the terminal device 20 may be a touch unit integrated into the display unit 24, or it may be a physical button. The input information IN is then transmitted to the multimedia system 10, causing the image generation unit 130 to generate the image M1 based on the input information IN. The image generation unit 130 may include a generative artificial intelligence (AI) module 132, and the generative AI module 132 may be, but is not limited to, Midjourney^{®}, Stable Diffusion^{®}, Microsoft Copilot^{®}, Google Bard^{®}, OpenAI Sora^{®}, or Luma Dream Machine^{®}, which can convert text-based input information IN into corresponding images. The images (e.g., M1) generated by the generative AI module 132 can be static images or dynamic videos. Since the generative AI module 132 operates by using artificial neural networks to generate images, and the artificial neural networks inherently incorporate elements of randomness, the images M1 generated by the generative AI module 132 will be different even if the same input information IN is input. In this way, different users will obtain different images M2 through the terminal device 20 even if they select the same scenario, which greatly enhances the user's willingness to use the multimedia system 10. Due to the different images generated each time, users can obtain a fresh sensory experience and maintain their interest in exploring the system. This is especially important for systems with rich content, as it can effectively prevent users from becoming bored due to repetitive content. Furthermore, based on randomly generated images, users can unleash their creativity by using randomly generated images to create secondary works, adding an extra layer of enjoyment. This open-ended interactive mode can spark users' creativity and foster the development of user communities. In addition, users can filter and collect randomly generated images based on their preferences, creating a personalized visual experience.

In some embodiments of the present disclosure, the display module 150 may further comprise a storage unit 170 for storing the received image M1. In some embodiments of the present disclosure, the display module 150 may further comprise a driving unit 190 for controlling the operations of the display module 150, such as driving the display unit 180 to display the image M1.

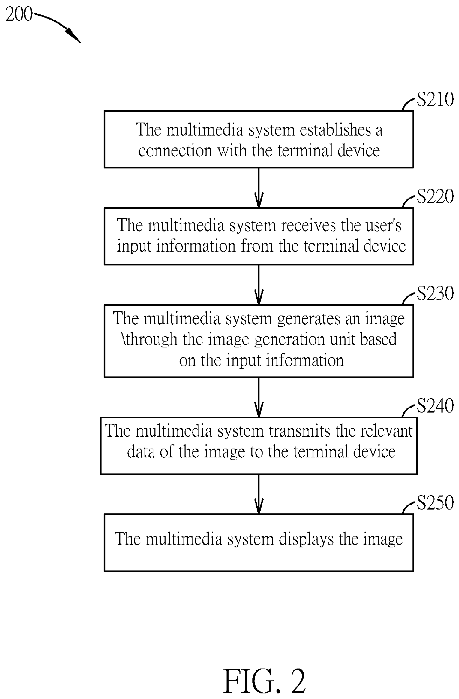

Please refer to FIG. 2. FIG. 2 is a flowchart of the interactive method 200 of the multimedia system 10 in FIG. 1. The interactive method 200 comprises the following steps:
Step S210: The multimedia system 10 establishes a connection with the terminal device 20;
Step S220: The multimedia system 10 receives the user's input information IN from the terminal device 20;
Step S230: The multimedia system 10 generates an image M1 through the image generation unit 130 based on the input information IN;
Step S240: The multimedia system 10 transmits the relevant data Infl of the image M1 to the terminal device 20; and
Step S250: The multimedia system 10 displays the image M1.

Please refer to FIG. 1 again. In some embodiments of the present disclosure, the processing module 100 further comprises a storage module 140, which may comprise at least one storage unit 141 for storing the images M1 to Mn generated by the image generation unit 130. In some embodiments of the present disclosure, the storage module 140 may comprise storage units 141 and 142, where the storage unit 141 is used to store the images M1 to Mn generated by the image generation unit 130, and the storage unit 142 is used to store the relevant information Inf1 to Infn of the images M1 to Mn. The relevant information Infl to Infn may be generated by compressing or thumbnail processing the images M1 to Mn through the processing unit 120. For example, the relevant information Infn may be generated by compressing or thumbnail processing the image Mn through the processing unit 120, and the relevant information Infn may be a thumbnail of the image Mn.

In some embodiments of the present disclosure, the image generation unit 130 of the processing module 100 may pre-generate the images M1 to Mn and the relevant information Inf1 to Infn. After the user transmits the input information IN to the multimedia system 10 through the terminal device 20, the processing unit 120 selects a corresponding image and relevant information from the images M1 to Mn and the relevant information Infl to Infn based on the received input information IN, and transmits the selected image and relevant information to the display module 150 and the terminal device 20, respectively. For example, after the image generation unit 130 generates the images M1 to Mn and the relevant information Inf1 to Infn, the processing unit 120 receives the input information IN and selects the image M1 and the relevant information Infl based on the input information IN. The processing unit 120 then transmits the selected image M1 to the display module 150 and the relevant information Infl to the terminal device 20, so that the display unit 180 of the display module 150 displays the image M1, and the display unit 24 of the terminal device 20 displays the image M2 based on the relevant information Infl. As mentioned above, in some embodiments of the present disclosure, the relevant data Infl of the image M1 may be all the data of the image M1, and the image M2 displayed by the display unit 24 is the original image M1. In some embodiments of the present disclosure, the relevant data Infl of the image M1 may be generated by compressing or thumbnail processing the image M1 through the processing unit 120, and the resolution and/or data amount of the image M2 displayed by the display unit 24 may be less than the resolution and/or data amount of the image M1.

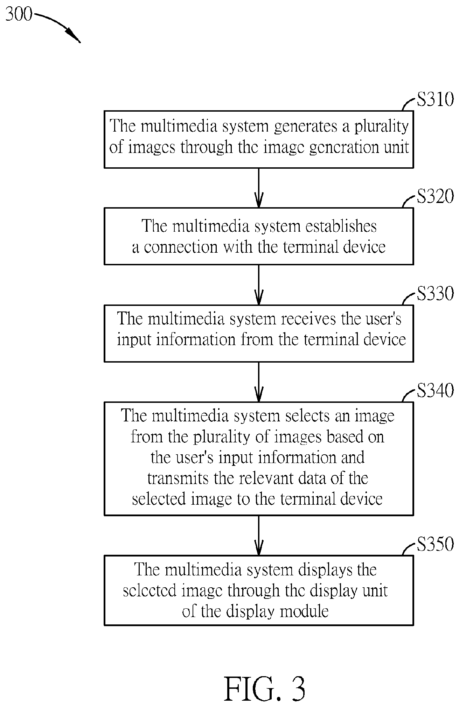

Please refer to FIG. 3. FIG. 3 is a flowchart of another interactive method 300 of the multimedia system 10 in FIG. 1. The interactive method 300 comprises the following steps:
Step S310: The multimedia system 10 generates a plurality of images M1 to Mn through the image generation unit 130;
Step S320: The multimedia system 10 establishes a connection with the terminal device 20;
Step S330: The multimedia system 10 receives the user's input information IN from the terminal device 20;
Step S340: The multimedia system 10 selects an image from the plurality of images M1 to Mn based on the user's input information IN and transmits the relevant data (e.g., Inf1, Infn) of the selected image to the terminal device 20; and
Step S350: The multimedia system 10 displays the selected image through the display unit 180 of the display module 150.

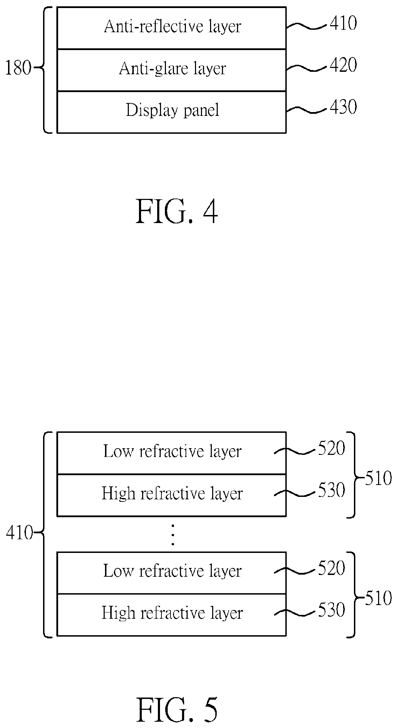

Please refer to FIG. 4. FIG. 4 is a schematic diagram of the display unit 180 in the multimedia system 10 shown in FIG.1. The display unit 180 may include an anti-reflective layer (AR Layer) 410, an anti-glare layer (AG Layer) 420, and a display panel 430. The AG Layer 420 is disposed between the display panel 430 and the AR Layer 410. The AR Layer 410 may be an optical coating or a structure composed of alternating layers of transparent films with high and low refractive indices to reduce light reflection. The AG Layer 420 is used to enhance light scattering and achieve an anti-glare effect. The display panel 430 includes a plurality of pixels for displaying images. Through the AR Layer 410 and the AG Layer 420, the display unit 180 can produce a display effect with low reflectivity and high scattering, similar to paper. Due to the effects of the AR Layer 410 and the AG Layer 420, the display unit 180 has ultra-low specular reflection and can effectively prevent glare caused by external ambient light, allowing the display unit 180 to clearly present every detail of the image and provide a realistic sense of presence for specific thematic photos.

Please refer to FIG. 5. FIG. 5 is a schematic structural diagram of the AR layer 410 in FIG. 4. The AR layer 410 comprises two or more anti-reflective modules 510, each of which comprises a low refractive layer 520 and a high refractive layer 530. Both the low refractive layer 520 and the high refractive layer 530 are light-transmitting thin film structures, and the refractive index of the high refractive layer 530 is greater than that of the low refractive layer 520. For example, the refractive index of the high refractive layer 530 may range from 2 to 2.5, while the refractive index of the low refractive layer 520 may range from 1 to 1.5. The material of the High Refractive Layer 530 may be selected from light-transmitting substances such as silicon nitride (SiNₓ), niobium pentoxide (Nb₂O₅), titanium dioxide (TiO₂), tantalum pentoxide (Ta₂O₅), etc. The material of the low refractive layer 520 may be selected from light-transmitting substances such as silicon dioxide (SiO₂), magnesium fluoride (MgF₂), calcium fluoride (CaF₂), etc.

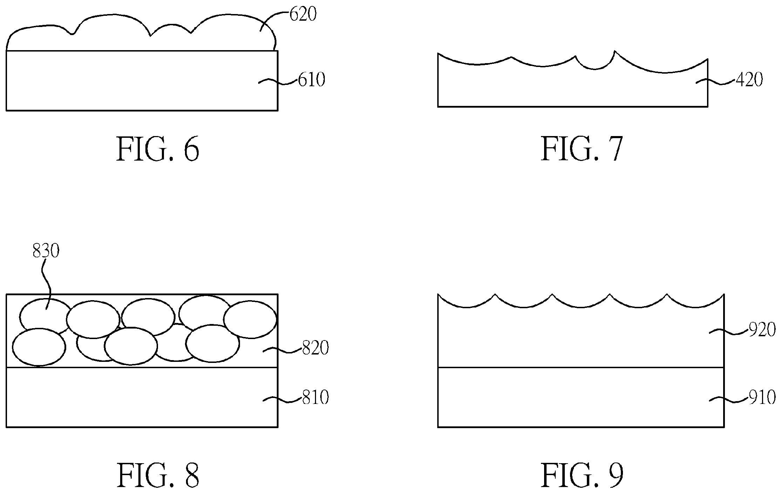

Please refer to FIG. 6 to FIG. 9. FIG. 6 to FIG. 9 are schematic diagrams of the anti-glare layer in FIG. 4 according to different embodiments of the present disclosure. In the embodiment of FIG. 6, the anti-glare layer 420 includes a substrate 610 and a sprayed anti-glare layer 620. The material of the sprayed anti-glare layer 620 can be silicon dioxide or the like, and the material of the substrate 610 can be glass, plastic, or other transparent materials. The sprayed anti-glare layer 620 is formed on the substrate 610 by spraying, and the surface of the sprayed anti-glare layer 620 has minute irregularities to increase diffuse reflection and reduce specular reflection. In the embodiment of FIG. 7, the surface of the anti-glare layer 420 has minute irregularities formed by mechanical machining or chemical etching. In the embodiment of FIG. 8, the anti-glare layer 420 includes a substrate 810 and a structural layer 820, and the structural layer 820 has a plurality of silicon dioxide particles 830. The material of the structural layer 820 can be polymethyl methacrylate or a mixture thereof, and the material of the substrate 810 can be glass, plastic, or other transparent materials. In the embodiment of FIG. 9, the anti-glare layer 420 includes a substrate 910 and a hard coating layer 920, and the hard coating layer 920 is formed on the substrate 910 by a spray coating process, physical vapor deposition (PVD), chemical vapor deposition (CVD), or sol-gel process. In some embodiments, the rough surface of the hard coating layer 920 can be formed by a nanoimprint process on the hard coating layer, but the present disclosure is not limited thereto. In other embodiments, the rough surface of the hard coating layer 920 can be formed by etching the hard coating layer. The material of the substrate 910 can be glass, plastic, or other transparent materials, and the material of the hard coating layer 920 can be a curable resin (such as a photocurable resin or a thermosetting resin) doped with a plurality of silicon dioxide particles or other transparent and wear-resistant materials.

The multimedia system disclosed herein is an innovative technology that allows users to perform scene-based operations through various terminal devices (such as mobile phones, tablets, or laptops). These scenes can be real-world environments, such as a room or a park, or virtual environments, such as a game scene or a movie scene. Users can select the scenes they are interested in, and then generate images related to the scene through the system's generative AI module. The generative AI module uses advanced deep learning techniques to generate high-quality images based on the characteristics of the scene and the user's needs. These generated images can not only be displayed on the system's display unit for users to view in real time, but can also be transmitted to the user's terminal device via a wireless network or data network. In this way, users can enjoy these images anytime, anywhere, and can save them on their own devices for personal use or sharing. In summary, the multimedia system disclosed herein provides a new way for users to interact with digital content more intuitively and conveniently, and to enjoy the high-quality image experience brought by generative AI technology. This will greatly improve users' digital quality of life and open up new possibilities for multimedia applications.

## Claims

1. A multimedia system (10) for interacting with a terminal device (20) of a user, the multimedia system (10) **characterized by** comprising:
a processing module (100), comprising a processing unit (120) and an image generation unit (130), wherein the processing unit (120) is electrically connected to the image generation unit (130) and configured to receive input information (IN) from the terminal device (20), and the image generation unit (130) generates an image (M1) based on the input information (IN) and transmits relevant data (Inf1) of the image (M1) to the terminal device (20); and
a display module (150), comprising a receiving unit (160) and a display unit (180) electrically connected to the receiving unit (160), wherein the receiving unit (160) is configured to receive the image (M1) from the processing module (100) and transmit the image (M1) to the display unit (180), and the display unit (180) is configured to display the image (M1).

2. The multimedia system (10) of claim 1, **characterized in that** the processing module (100) further comprises a first storage unit (141) for storing the image (M1) and a second storage unit (142) for storing the relevant data (Inf1) generated by the processing unit (120) through compression or thumbnail generation of the image (M1).

3. The multimedia system (10) of any of claims 1 to 2, **characterized in that** the relevant data (Inf1) is all data of the image (M1).

4. The multimedia system (10) of any of claims 1 to 3, **characterized in that** the image generation unit (130) comprises a generative artificial intelligence module (132).

5. The multimedia system (10) of any of claims 1 to 4, **characterized in that** the display unit (180) comprises a display panel (430), an anti-glare layer (420), and an anti-reflective layer (410), and the anti-glare layer (420) is disposed between the display panel (430) and the anti-reflective layer (410).

6. An interactive method for a multimedia system (10) to interact with a terminal device (20) of a user, the interactive method **characterized by** comprising:
establishing a connection between the multimedia system (10) and the terminal device (20);
receiving input information (IN) from the terminal device (20) by the multimedia system (10);
generating an image (M1) based on the input information (IN) by an image generation unit (130) of the multimedia system (10);
transmitting relevant data (Inf1) of the image (M1) from the multimedia system (10) to the terminal device (20); and
displaying the image (M1) by the multimedia system (10).

7. The interactive method of claim 6, **characterized in that** establishing the connection between the multimedia system (10) and the terminal device (20) comprises:
providing a barcode (182) by the multimedia system (10); and
scanning the barcode (182) by the terminal device (20) to establish the connection between the multimedia system (10) and the terminal device (20).

8. The interactive method of any of claims 6 to 7, **characterized by** further comprising:
providing a plurality of scenarios for the user to select on the terminal device (20).

9. The interactive method of claim 8, **characterized in that** the input information (IN) is generated based on the scenario selected by the user.

10. The interactive method of any of claims 6 to 9, **characterized in that** transmitting the relevant data (Inf1) of the image (M1) to the terminal device (20) by the multimedia system (10) comprises:
compressing or thumbnail processing the image (M1) to generate the relevant data (Inf1).

11. The interactive method of any of claims 6 to 10, **characterized in that** displaying the image (M1) by the multimedia system (10) comprises:
displaying the image (M1) by a display unit (180) of the multimedia system (10);
wherein the display unit (180) comprises a display panel (430), an anti-glare layer (420), and an anti-reflective layer (410), and the anti-glare layer (420) is disposed between the display panel (430) and the anti-reflective layer (410).

12. A multimedia system (10) for interacting with a terminal device (20) of a user, the multimedia system (10) **characterized by** comprising:
a processing module (100), comprising:
an image generation unit (130) configured to generate a plurality of images (M1 to Mn); and
a processing unit (120) electrically connected to the image generation unit (130), and configured to receive input information (IN) from the terminal device (20), select a selected image (M1) from the plurality of images (M1 to Mn) generated by the image generation unit (130) based on the input information (IN), and transmit relevant data (Inf1) of the selected image (M1) to the terminal device (20); and
a display module (150), comprising a receiving unit (160) and a display unit (180) electrically connected to the receiving unit (160), wherein the receiving unit (160) is configured to receive the selected image (M1) from the processing module (100) and transmit the selected image (M1) to the display unit (180), and the display unit (180) is configured to display the selected image (M1).

13. The multimedia system (10) of claim 12, **characterized in that** the processing module (100) further comprises a first storage unit (141) and a second storage unit (142), the first storage unit (141) is configured to store the plurality of images (M1 to Mn), the second storage unit (142) is configured to store relevant data (Inf1) of the plurality of images (M1 to Mn), and the relevant data (Inf1) of the plurality of images (M1 to Mn) is generated by the processing unit (120) through compression or thumbnail generation of the plurality of images (M1 to Mn).

14. The multimedia system (10) of any of claims 12 to 13, **characterized in that** the relevant data (Inf1) of the selected image (M1) is all data of the selected image (M1).

15. The multimedia system (10) of any of claims 12 to 14, **characterized in that** the display unit (180) comprises a display panel (430), an anti-glare layer (420), and an anti-reflective layer (410), and the anti-glare layer (420) is disposed between the display panel (430) and the anti-reflective layer (410).
